# EUROPÄISCHE PATENTANMELDUNG

(11) **EP 4 008 587 A1**
(43) Veröffentlichungstag der Anmeldung: **08.06.2022**
(21) Anmeldenummer: 21211521.6
(22) Anmeldetag: 30.11.2021
(51) Int. Cl.: B60P 3/32, H02S 30/20, B60L 8/00, B60K 16/00

(54) **FREIZEITFAHRZEUG MIT EINEM SOLARMODUL**

(30) Priorität: 30.11.2020 DE 102020131749
(71) Anmelder: Erwin Hymer Group SE, 88339 Bad Waldsee (DE)
(72) Erfinder: Buck, Rainer, 88239 Wangen i. Allgäu (DE); Dorn, Günter, 88282 Schlier (DE); Metzler, Marcus, 88339 Bad Waldsee (DE)
(74) Vertreter: Waller, Stefan

(57) **Zusammenfassung**

Die Erfindung betrifft ein Freizeitfahrzeug (100) mit einem Solarmodul (110), dadurch gekennzeichnet, dass das Solarmodul (110) eben und faltbar ist; das Solarmodul (110) so auf oder an einem Dach (120) des Freizeitfahrzeugs (100) anordenbar ist, dass eine Oberfläche (112) des ausgefalteten Solarmoduls (100) größer oder gleich 50% einer Oberfläche des Dachs (120) des Freizeitfahrzeugs (110) ist.

## Beschreibung

Die Erfindung betrifft Freizeitfahrzeug mit einem Solarmodul.

Im Stand der Technik sind Freizeitfahrzeuge bekannt. Unter einem Freizeitfahrzeug wird ein Fahrzeug oder Anhänger verstanden, welches oder welcher zumindest ein mobil einsetzbares Element zum Camping aufweist oder zumindest temporär eine Einrichtung zum Campen aufweisen kann. Unter einem Freizeitfahrzeug wird insbesondere ein Campingfahrzeug verstanden. Unter einem Freizeitmobil wird ein motorisiertes Freizeitfahrzeug verstanden. Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil. Ein Wohnwagen kann zum Beispiel alternativ als Caravan oder Campinganhänger bezeichnet werden. Unter einem Campervan wird vorliegend ein Freizeitfahrzeug, insbesondere Freizeitmobil, verstanden, welches aus einem Transportfahrzeug mit serienmäßiger Karosserie gebildet ist, insbesondere einer Blechkarosserie.

Im Stand der Technik sind Solarmodule oder Photovoltaikmodule in flexibler und starrer Ausführung bekannt. Ein Solarmodul kann das Licht der Sonne direkt in elektrische Energie umwandeln. Das Modul weist in Serie oder parallel geschaltete Solarzellen auf. Starre Solarmodule weisen oftmals siliziumbasierte Solarzellen auf, welche auf einem Aluminiumrahmen montiert und von einer Glasplatte abgedeckt sind. Flexible Solarmodule basieren in der Regel auf organischen Werkstoffen.

Im Stand der Technik ist es bekannt, Solarzellen bei Freizeitfahrzeugen auf der freien Dachfläche zu montieren. Da die Varianz bei den verfügbaren Größen der Solarzellen äußerst begrenzt ist, kann so nur eine sehr eingeschränkte Fläche zur Stromerzeugung genutzt werden.

Eine Aufgabe der vorliegenden Erfindung liegt darin, den Stand der Technik zu verbessern. Es ist insbesondere eine Aufgabe der Erfindung, ein Freizeitfahrzeug mit einem Solarmodul anzugeben, welches mehr Energie liefert als Solarmodule des Stands der Technik.

Diese Aufgabe wird durch ein Solarmodul mit den Merkmalen des unabhängigen Patentanspruchs 1 gelöst. Vorteilhafte Weiterbildungen der Erfindung sind in den Unteransprüchen angegeben.

Folgendes Begriffliche sei erläutert:
Darunter, dass das Solarmodul eben ist, soll verstanden werden, dass das Solarmodul im ausgefalteten Zustand in einer Ebene anordenbar ist.
Darunter, dass das Solarmodul faltbar ist, soll verstanden werden, dass das Solarmodul entlang mindestens einer Faltlinie gefaltet werden kann. Dies hat den Vorteil, dass die Einzelelemente des Solarmoduls äußerst platzsparend angeordnet, insbesondere zusammengefaltet, werden können.

Unter dem Ausdruck "auf oder an einem Dach" soll unter anderem verstanden werden, dass das Solarmodul auch als auskragende Lösung, z.B. als Seitenmarkise, Heckmarkise oder als tragbare Version ausgebildet werden kann, so dass das Solarmodul zum Beispiel seitlich von der Dachfläche hinausragt oder hervorspringt.

Bevorzugt ist das Solarmodul flexibel oder weist zumindest eine flexible Schicht auf. Hierdurch wird vorteilhafterweise erreicht, dass das Solarmodul zumindest an einer Faltlinie, an der das Solarmodul lediglich die flexible Schicht aufweist, in einfacher Art und Weise gefaltet werden kann.

Dem erfindungsgemäßen Freizeitfahrzeug steht durch das Solarmodul vorteilhafterweise eine wesentlich höhere elektrische Leistung aus der Solarenergie zur Verfügung, welche unter anderem ermöglicht, dass der autarke Betrieb eines Freizeitfahrzeugs länger nutzbar ist oder dass im autarken Betrieb Verbraucher mit einer größeren Leistung verwendbar sind. Dies liegt insbesondere an der größeren nutzbaren Fläche, welche insbesondere auf dem Dach des Freizeitfahrzeugs durch die erfindungsgemäße Lösung zur Verfügung steht.

Ein weiterer Vorteil des erfindungsgemäßen Freizeitfahrzeugs besteht darin, dass eine Größe und / oder Form des Solarmoduls variabel ist und somit optimal an unterschiedliche Fahrzeuggrößen und / oder Fahrzeugformen anpassbar ist.

Noch ein weiterer Vorteil besteht darin, dass das ausgefaltete Solarmodul eine zusätzliche Beschattung der gesamten Dachfläche bewirkt, sodass das Innere des Freizeitfahrzeugs weniger stark aufgeheizt wird, was wiederum bewirkt, dass weniger Energie aufgewendet werden muss, um das Innere des Freizeitfahrzeugs zu kühlen.

Weiterhin kann das ausgefaltete Solarmodul auch als Hagelschutz für das Freizeitfahrzeug verwendet werden.

Gemäß einer bevorzugten Ausführungsform ist die Oberfläche des ausgefalteten Solarmoduls größer oder gleich 80%, bevorzugt 100%, der Oberfläche des Dachs des Freizeitfahrzeugs. Es soll betont werden, dass die Oberfläche des ausgefalteten Solarmoduls auch größer als die Oberfläche des Dachs des Freizeitfahrzeugs sein kann. Hierdurch wird vorteilhafterweise erreicht, dass mehr Solarstrom erzeugt werden kann.

Bevorzugt weist das Solarmodul eine organische Solarzelle (engl.: Organic photovoltaics, Abkürzung OPV) auf. Dies hat den Vorteil, dass das Solarmodul flexibel gefertigt werden kann. Die organische Solarzelle kann bevorzugt auf ein Material gedruckt werden. Als Solarzelle kann auch eine Dünnschicht-Solarzelle eingesetzt werden.

Das Solarmodul weist bevorzugt mehrere Schichten auf.

Gemäß einer weiteren bevorzugten Ausführungsform weist das Solarmodul eine flexible Basisschicht auf. Hierbei weist die Basisschicht auf zumindest einer Seite, bevorzugt auf beiden Seiten, eine Deckschicht auf. Die Deckschicht weist auf einer Seite eine organische Solarzellenschicht auf, welche bevorzugt aufgedruckt ist.

Bevorzugt weist die organische Solarzellenschicht eine Schutzschicht, insbesondere eine Schutzfolie, auf.

Die Deckschicht weist bevorzugt ein stabiles Material auf und ist bevorzugt einfach zu bedrucken. Die Basisschicht weist bevorzugt ein dauerhaft flexibles Material auf.

Gemäß noch einer weiteren bevorzugten Ausführungsform weist das Solarmodul ein Foliengelenk oder Filmscharnier zum Falten des Solarmoduls auf. Hierdurch wird vorteilhafterweise erreicht, dass das Solarmodul sowohl in einfacher Art und Weise auf und zugeklappt werden kann als auch, dass das Gelenk oder Scharnier dünn, jedoch robust ist.

Gemäß noch einer weiteren, bevorzugten Ausführungsform weist das Solarmodul am Foliengelenk lediglich die flexible Basisschicht auf. Das Foliengelenk wird hierbei durch die flexible Basisschicht gebildet. Hierdurch kann man aus dem mehrschichtigen Solarmodul in einfacher Art und Weise ein faltbares Solarmodul erhalten.

Bevorzugt kann das Foliengelenk ausgehend von dem mehrschichtigen Solarmodul wie folgt hergestellt werden: Entlang einer Faltkante werden auf beiden Seiten der Basisschicht die auf der Basisschicht befindlichen Schichten bis auf die Basisschicht durchtrennt, bevorzugt durchgefräst. Die verbleibende, flexible Basisschicht bildet somit das Foliengelenk oder Filmscharnier.

Gemäß einer anderen Ausführungsform ist eine Form des Solarmoduls an das Freizeitfahrzeug, insbesondere an eine dreidimensionale Form des Dachs des Freizeitfahrzeugs oder eine zweidimensionale Anordnung der Dach- oder Fahrzeugaufbauten auf dem Dach, angepasst oder anpassbar. Hierbei werden unter der dreidimensionalen Form des Dachs des Freizeitfahrzeugs insbesondere Fahrzeugaufbauten wie zum Beispiel aufstellbare Fenster oder dergleichen verstanden. Für den Fall, dass das Solarmodul auf dem Dach des Freizeitfahrzeugs angebracht werden soll, kann durch eine Anpassung der Form des Solarmoduls die verfügbare Dachoberfläche maximal genutzt werden, während gleichzeitig die Funktion der Fahrzeugaufbauten oder Dachaufbauten nicht oder nur geringfügig eingeschränkt wird.

Bevorzugt weist das Solarmodul eine rechteckige Form und eine Vielzahl von parallelen Faltkanten, welche jeweils parallel zu einer Seite des Rechtecks verlaufen, auf. Hierdurch wird vorteilhafterweise erreicht, dass das Solarmodul in einfacher Art und Weise zusammengefaltet werden kann.

Gemäß einer anderen bevorzugten Ausführungsform weist das Solarmodul ferner eine Vorrichtung zum Befestigen und/oder zum Führen des Solarmoduls auf. Hierbei ist das Solarmodul in dieser Vorrichtung sowohl im zusammengefalteten als auch im ausgefalteten Zustand führbar und/oder befestigbar.

Die Vorrichtung zum Befestigen und/oder zum Führen des Solarmoduls kann z.B. eine auf oder an dem Dach montierte Schiene sein, in welcher das Solarmodul geführt werden kann und/oder befestigt werden kann. Alternativ kann das Solarmodul in anderen Führungssystemen geführt werden. Ein solches Führungssystem kann zum Beispiel ein Seil, ein Stab oder ein Profil mit Gleitern sein. Das Solarmodul kann an der Vorrichtung zum Befestigen und/oder zum Führen des Solarmoduls montiert sein und das Gesamtsystem bestehend aus dem Solarmodul der Vorrichtung kann auf oder an der Dachfläche eines Freizeitfahrzeuges installiert werden. Alternativ kann das Gesamtsystem auch an einer Seitenwand des Freizeitmoduls befestigt werden.

Hierbei ist das Solarmodul in der Vorrichtung zum Befestigen und/oder zum Führen des Solarmoduls bevorzugt in einer parallel zum Dach des Freizeitfahrzeugs verlaufenden Ebene führbar und/oder befestigbar. Gemäß einer anderen Ausführungsform kann diese Ebene einen Neigungswinkel zur Horizontalen aufweisen, um Sonnenlicht besser zu sammeln.

Ein Abstand der Vorrichtung zum Befestigen und/oder zum Führen des Solarmoduls zum Dach ist bevorzugt so gewählt, dass die Funktion der Fahrzeugaufbauten oder Dachaufbauten nicht oder lediglich geringfügig eingeschränkt wird. Bevorzugt liegt das ausgefaltete Solarmodul oberhalb der Dachaufbauten.

Gemäß noch einer anderen bevorzugten Ausführungsform ist die Vorrichtung zum Befestigen und/oder zum Führen des Solarmoduls auf oder an dem Dach des Freizeitfahrzeugs angeordnet. Hierbei ist das Solarmodul mit seiner Längsachse bevorzugt parallel zur Fahrtrichtung angeordnet.

Die Vorrichtung zum Befestigen und/oder zum Führen des Solarmoduls ist bevorzugt oberhalb der Dach- oder Fahrzeugaufbauten im geschlossenen oder im nicht aufgebauten Zustand angeordnet. Hierdurch wird vorteilhafterweise erreicht, dass die Funktion der Fahrzeugaufbauten oder Dachaufbauten nicht oder nur geringfügig eingeschränkt wird.

Ein oben genanntes Solarmodul kann wie nachfolgend beschrieben hergestellt werden. Gemäß einem ersten Schritt des Verfahrens wird eine Basisschicht bereitgestellt. Mit einem zweiten Schritt des Verfahrens wird eine Deckschicht auf einer Seite der Basisschicht aufgetragen. Optional kann nach dem zweiten Schritt eine zweite Deckschicht auf einer zweiten Seite der Basisschicht, welche der ersten Seite gegenüberliegt, aufgetragen werden. In diesem Fall kann die erstgenannte Deckschicht als erste Deckschicht bezeichnet werden.

Gemäß einem dritten Schritt des Verfahrens wird eine organische Solarzellenschicht auf einer Seite der Deckschicht, insbesondere der ersten Deckschicht, aufgetragen. Hierbei wird die organische Solarzellenschicht auf derjenigen Seite der Deckschicht aufgetragen, welche der Basisschicht gegenüberliegt.

Gemäß einem vierten Schritt des Verfahrens wird die Deckschicht, insbesondere die erste Deckschicht, und die organische Solarzellenschicht, durchtrennt, bevorzugt durchgefräst, sodass die verbleibende Basisschicht ein Foliengelenk oder ein Filmscharnier bildet.

Bevorzugt erfolgt die Durchtrennung oder die Fräsung entlang einer Faltkante des Solarmoduls.

Optional kann in einem vierten Schritt des Verfahrens eine Schutzschicht auf der organischen Solarzellenschicht aufgetragen werden.

Ausführungsbeispiele der Erfindung sind in den Zeichnungen dargestellt und werden in der nachfolgenden Beschreibung näher erläutert.
Figur 1 zeigt eine schematische Darstellung eines Daches eines Freizeitfahrzeugs des Stands der Technik.
Figur 2 zeigt eine schematische Darstellung eines Freizeitfahrzeugs mit einem Solarmodul gemäß einem Ausführungsbeispiel der Erfindung.
Figur 3 zeigt eine schematische Darstellung eines in einer Vorrichtung zum Befestigen und/oder zum Führen des Solarmoduls befestigten Solarmoduls sowohl im zusammengefalteten als auch im ausgefalteten Zustand, wobei das Solarmodul ein Teil eines Freizeitfahrzeugs gemäß einem Ausführungsbeispiel der Erfindung ist.
Figur 4 zeigt eine schematische Darstellung eines Schnitts durch ein Solarmodul eines Freizeitfahrzeugs gemäß einem Ausführungsbeispiel der Erfindung.

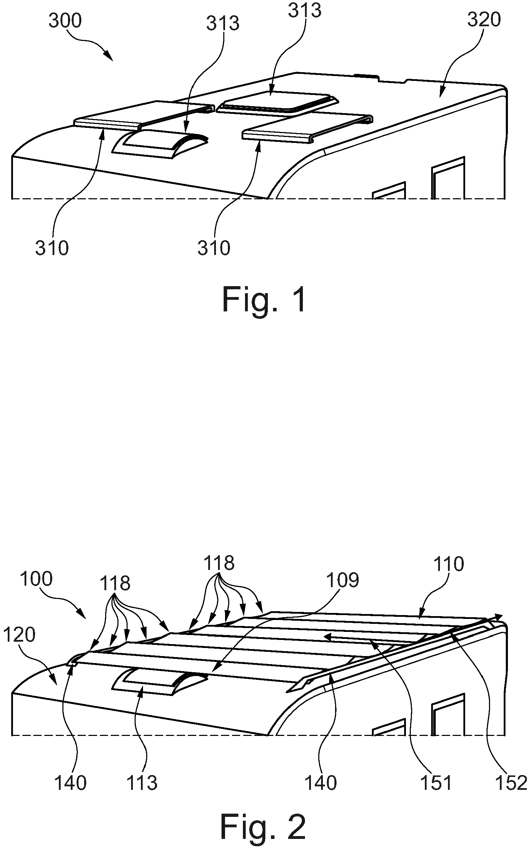

Figur 1 zeigt ein Freizeitfahrzeug 300 des Stands der Technik mit einem Dach 320, auf welchem Dachaufbauten 313 wie z.B. Dachfenster, Dachhauben oder Ähnliches sowie zwei Solarmodule 310 angeordnet sind. Aufgrund der Tatsache, dass die Dachaufbauten 313 auf dem Dach 320 eine vergleichsweise große Fläche einnehmen, bleibt für die Solarmodule 310 lediglich eine relativ kleine bebaubare Fläche übrig.

Figur 2 zeigt ein erfindungsgemäßes Freizeitfahrzeug 100 mit einem auf einem Dach 120 des Freizeitfahrzeugs 100 befestigten, ebenen und faltbaren Solarmodul 110. Eine Oberfläche des ausgefalteten Solarmoduls 110 ist größer als 50% einer Oberfläche des Dachs 120 des Freizeitfahrzeugs 100.

Das Solarmodul 110 ist rechteckig und hat eine Vielzahl von parallelen Faltkanten 118, welche jeweils parallel zu einer Seite des Rechtecks verlaufen. Mithilfe der Faltkanten 118 kann das Solarmodul 110 zusammen und auseinandergefaltet werden.

Eine Form und Position des Solarmoduls 100 ist an eine dreidimensionale Form des Dachs 120 des Freizeitfahrzeugs 120 angepasst.

Ferner weist das Freizeitfahrzeug 100 eine Vorrichtung zum Befestigen und/oder zum Führen des Solarmoduls 110 auf. Diese Vorrichtung weist vorliegend zwei auf dem Dach befestigte und jeweils parallel zu einander verlaufende Schienen 140 auf. Jede Schiene 140 verläuft jeweils parallel zur Fahrtrichtung 109 des Freizeitfahrzeugs 100 und ist jeweils an einem äußeren seitlichen Ende des Dachs 120 befestigt. Jede Schiene 140 weist in einem mittleren Bereich zwischen den beiden Befestigungsstellen am Dach 120 einen gerade verlaufenden Abschnitt auf, welcher einen vorgegebenen Abstand zum Dach 120 aufweist. Bei beiden Schienen 140 ist dieser vorgegebene Abstand zum Dach 120 derselbe. Die beiden Schienen 140 sind spiegelsymmetrisch zu einer Längsachse des Freizeitfahrzeugs 100.

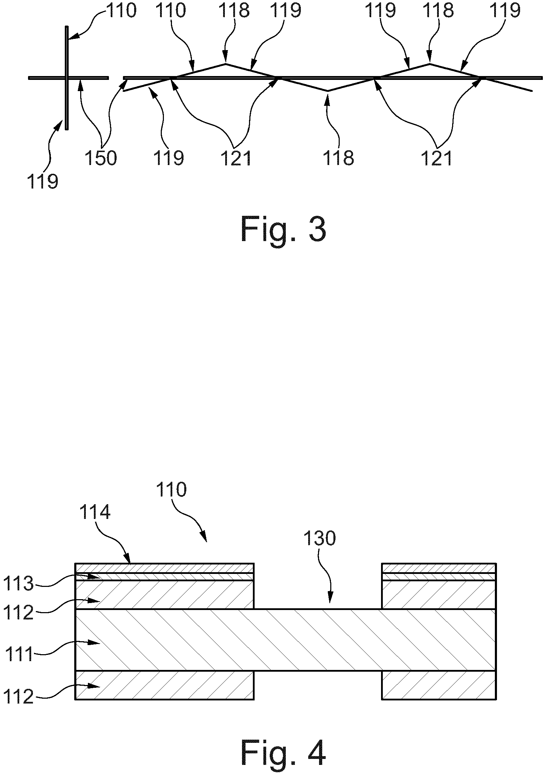

Das Solarmodul 110 ist in den Schienen 140 in einer parallel zum Dach 120 des Freizeitfahrzeugs 100 verlaufenden Ebene 150 führbar und befestigbar. Dies gilt sowohl für den zusammengefalteten als auch für den ausgefalteten Zustand des Solarmoduls 110. Die Ebene 150 ist in Figur 3 dargestellt und wird durch die beiden in Figur 2 dargestellten Pfeile 151 und 152 aufgespannt. Pfeil 151 verläuft senkrecht zur Fahrtrichtung 109 und Pfeil 152 entgegengesetzt zur Fahrtrichtung 109.

Die Ebene 150 hat den oben genannten vorgegebenen Abstand zum Dach 120.

Die Ebene 150 als auch die mittleren Bereiche der beiden Schienen 140 sind jeweils oberhalb der Dach- oder Fahrzeugaufbauten 113 im geschlossenen Zustand angeordnet.

Figur 3 zeigt in zwei Teilabbildungen jeweils das Solarmodul 110 in einem zusammengeklappten und in einem ausgeklappten Zustand. Die linke Seite der Figur 3 zeigt in der ersten Teilabbildung das zusammengeklappte Solarmodul 110, die rechte Seite der Figur 3 zeigt das Solarmodul 110 im ausgeklappten Zustand. Die Ebene 150 verläuft entlang der vertikalen Ausdehnung des Solarmoduls 110 jeweils mittig.

Elemente 119 des Solarmoduls 110, welche jeweils zwischen benachbarten Faltkanten 118 des Solarmoduls 100 angeordnet sind, sind jeweils an mittleren Punkten 121 an gegenüberliegenden Kanten des Solarmoduls 100 entlang einer senkrecht zur Fahrtrichtung 109 verlaufenden Querachse an den Schienen 140 befestigt. Hierzu sind an gegenüberliegenden Kanten des Solarmoduls 100 jeweils an den Punkten 121 Stifte befestigt, welche entlang der Schienen 140 verschiebbar sind. Die Stifte können innerhalb der Schienen 140 arretiert werden. Durch diese Konstruktion können die Elemente 119 des Solarmoduls 110 in den Schienen 140 an einer beliebigen Stelle entlang der Fahrtrichtung 109 des Freizeitfahrzeugs 100 zusammen geklappt oder zusammengefaltet werden, sodass man eine Position wie in der linken Teilabbildung erhält. Ausgehend von der linken Teilabbildung kann man das zusammengefaltete Solarmodul 110 auseinander klappen, sodass man eine Anordnung wie in der rechten Teilabbildung erhält.

Figur 4 zeigt einen Schnitt durch ein Solarmodul 110.

Das Solarmodul 110 weist eine flexible Basisschicht 111 auf, welche auf beiden Seiten jeweils eine Deckschicht 112 aufweist. Eine der beiden Deckschichten 112 weist auf derjenigen Seite, welche von der Basisschicht 111 abgewandt ist, eine organische Solarzellenschicht 113 auf. Die Solarzellenschicht 113 weist auf derjenigen Seite, welche von der Deckschicht 112 abgewandt ist, eine Schutzschicht 114, z.B. Eine Schutzfolie, auf.

Das Solarmodul 110 weist jeweils an den Faltkanten 118 Foliengelenke 130 zum Falten des Solarmoduls 110 auf. An jedem Foliengelenk 130 weist das Solarmodul 110 lediglich die flexible Basisschicht 111 auf.

Das Solarmodul 110 kann wie folgt hergestellt werden. In einem ersten Schritt des Verfahrens wird die flexible Basisschicht 111 bereitgestellt. In einem zweiten Schritt des Verfahrens wird auf jede Seite der Basisschicht 111 jeweils eine Deckschicht 112 aufgetragen. In einem dritten Schritt des Verfahrens wird eine organische Solarzellenschicht 113 auf eine Seite einer Deckschicht 112 gedruckt. Hierbei wird die organische Solarzellenschicht 113 auf derjenigen Seite der Deckschicht 112 aufgetragen, welche der Basisschicht 111 gegenüberliegt.

In einem vierten Schritt des Verfahrens wird die Deckschicht 112 und die organische Solarzellenschicht 113 durchgefräst, sodass die verbleibende flexible Basisschicht 111 ein Foliengelenk oder ein Filmscharnier bildet. Die Fräsung erfolgt jeweils entlang einer Faltkante 118 des Solarmoduls 110. Die Fräsung kann jeweils an allen parallel zueinander verlaufenden Faltkanten 118 durchgeführt werden.

## Patentansprüche

1. Freizeitfahrzeug (100) mit einem Solarmodul (110),
**dadurch gekennzeichnet, dass**
das Solarmodul (110) eben und faltbar ist;
das Solarmodul (110) so auf oder an einem Dach (120) des Freizeitfahrzeugs (100) anordenbar ist, dass eine Oberfläche (112) des ausgefalteten Solarmoduls (100) größer oder gleich 50% einer Oberfläche des Dachs (120) des Freizeitfahrzeugs (110) ist.

2. Freizeitfahrzeug (100) nach Anspruch 1,
**dadurch gekennzeichnet, dass**
die Oberfläche des ausgefalteten Solarmoduls (100) größer oder gleich 80%, bevorzugt 100%, der Oberfläche des Dachs (120) des Freizeitfahrzeugs (110) ist.

3. Freizeitfahrzeug (100) nach Anspruch 1 oder 2,
**dadurch gekennzeichnet, dass**
das Solarmodul (110) eine organische Solarzelle aufweist.

4. Freizeitfahrzeug (100) nach einem der vorangegangenen Ansprüche,
**dadurch gekennzeichnet, dass**
das Solarmodul (110) eine flexible Basisschicht (111) aufweist;
die Basisschicht (111) auf zumindest einer Seite eine Deckschicht (112) aufweist; und
die Deckschicht (112) auf einer Seite eine organische Solarzellenschicht (113) aufweist.

5. Freizeitfahrzeug (100) nach dem vorangegangenen Anspruch,
**dadurch gekennzeichnet, dass**
das Solarmodul (110) ein Foliengelenk (130) zum Falten des Solarmoduls (110) aufweist.

6. Freizeitfahrzeug (100) nach dem vorangegangenen Anspruch,
**dadurch gekennzeichnet, dass**
das Solarmodul (110) am Foliengelenk (130) lediglich die flexible Basisschicht (111) aufweist.

7. Freizeitfahrzeug (100) nach einem der vorangegangenen Ansprüche,
**dadurch gekennzeichnet, dass**
eine Form des Solarmoduls (100) an das Freizeitfahrzeug (100), insbesondere an eine dreidimensionale Form des Dachs (120) des Freizeitfahrzeugs (110), angepasst oder anpassbar ist.

8. Freizeitfahrzeug (100) nach einem der vorangegangenen Ansprüche,
**dadurch gekennzeichnet, dass**
das Solarmodul (110) eine rechteckige Form und eine Vielzahl von parallelen Faltkanten (118), welche jeweils parallel zu einer Seite des Rechtecks verlaufen, aufweist.

9. Freizeitfahrzeug (100) nach einem der vorangegangenen Ansprüche, ferner aufweisend:
eine Vorrichtung (140) zum Befestigen und/oder zum Führen des Solarmoduls (100),
wobei das Solarmodul (110) in der Vorrichtung (140) zum Befestigen und/oder zum Führen des Solarmoduls (100) bevorzugt in einer parallel zum Dach (120) des Freizeitfahrzeugs (110) verlaufenden Ebene sowohl im zusammengefalteten als auch im ausgefalteten Zustand führbar und/oder befestigbar ist.

10. Freizeitfahrzeug (100) nach dem vorangegangenen Anspruch, **dadurch gekennzeichnet, dass**
die Vorrichtung (140) zum Befestigen und/oder zum Führen des flexiblen Solarmoduls (100) auf oder an dem Dach (120) des Freizeitfahrzeugs (110) angeordnet ist.
